# EUROPEAN PATENT SPECIFICATION

(11) **EP 0 703 518 B1**
(45) Date of publication and mention of the grant of the patent: **10.05.2000**
(21) Application number: 95202583.1
(22) Date of filing: 25.09.1995
(51) Int. Cl.: G05D 7/06

(54) **Ventilating device for controlling the position of an air passage valve**
Belüftungsvorrichtung zur Regelung der Position eines Luftdurchlassventils
Dispositif d'aération pour contrôler la position d'une soupape de passage d'air

(30) Priority: 23.09.1994 NL 9401554; 03.02.1995 NL 9500205
(43) Date of publication of application: 27.03.1996
(73) Proprietor: Zwaan, Adrianus Jacobus, NL-2252 BD Voorschoten (NL)
(72) Inventor: Zwaan, Adrianus Jacobus, NL-2252 BD Voorschoten (NL)
(74) Representative: Smulders, Theodorus A.H.J., Ir.

(56) References cited:
- DE-A- 3 303 987
- US-A- 3 757 808
- US-A- 4 199 981
- US-A- 4 926 903

## Description

The invention relates to a ventilating device comprising an inlet opening for air, an interior, an outflow opening and an air valve, the size of the outflow opening being controlled by means of the air valve, a system being provided for controlling the position of the air valve.

Such a ventilating system is known from DE-A-3303987.

Ventilating devices comprising an air passage valve are generally known and can be incorporated into a door casing or window casing, with the ventilating device often extending throughout the width of the door or the window. The ventilating device has a ventilating grate through which an air flow passes whose magnitude can be varied by adjusting the position of the air valve. The air valve can be a pivoting valve as well as a sliding valve. An example of such a ventilating device is described in NL-A-8401388.

The above-mentioned DE-A-3303987 describes a ventilating device which forms part of a channel-shaped climate control system, while it is observed that the extent of opening of the ventilating openings, settable through rotation or sliding, can be controlled by means of adjusting motors. However, this publication does not at all describe in what manner such a control can be realized.

On the basis of, inter alia, recent developments in the building industry, it is desired that a ventilating device of the above-described type is adapted to let an air flow pass the ventilating grate at a predetermined flow rate, independently of the wind velocity along the facade. By automatically maintaining the flow rate of the air flow passing through the ventilating grate at a fixed magnitude, not only the comfort within the house or building ventilated with such a ventilating device is increased, but also a saving of heating costs of ca. 90 m³ gas per year per ventilating device can be achieved.

At a pressure difference over the ventilating device in a range of 1-25 pascal, according to Dutch standard 1087:1991, it should be possible with a system for automatically controlling the position of an air valve to maintain a constant air flow of a velocity of 1 m/sec., with a tolerance of ca. 20%. Because ventilating devices of the subject type are also used on a large scale in house-building, it is moreover desired that the cost price of such an automatically controlling ventilating device is as low as possible.

Ventilating devices are known whose ventilating area is controlled by one or several slats horizontally disposed one above the other, each having, in cross section, the same configuration as the cross section of a wing of an aeroplane. According as the air velocity through the grate, i.e. the wind pressure on the facade, increases, these slats close, so that a sort of automatic control is obtained. The adjustment of this control should be carried out in a skilled manner and it can be expected that, with the passage of time, the controlling action becomes problematic, for instance due to contamination of the slats.

Hence, the object of the invention is to provide a system for the automatic control of the position of an air valve of a ventilating device to enable the air flow rate thus to be maintained at a fixed, predetermined value, which system is so cheap that it can without economical drawbacks be incorporated into (existing types of) ventilating devices for houses and buildings.

Another object of the invention is to provide such a system that is insusceptible to contamination and whose operation remains reliable also in the longer term.

The invention provides a system of the above-mentioned type, characterized in that the system comprises a sensor, which is arranged in a measuring channel communicating on the one hand with the air inlet opening and on the other hand with a space in the interior of the ventilating device, which communicates with a space in the interior behind the outflow opening of the ventilating device, and which is adapted to detect the velocity of the air flow along the air valve and to provide a signal whose magnitude is representative of the flow rate of the air flow, said signal being fed to an operating element for the position of the air valve.

In accordance with a preferred embodiment, the invention provides a system characterized in that the sensor comprises a circuit consisting of a first temperature-sensitive element and a second temperature-sensititive element, means being provided for heating the first temperature-sensitive element and the two temperature-sensitive elements being intended to be disposed in an opening whose size is determined by the position of the air valve or in an opening of a fixed size in the vicinity of the air valve; that the first and the second temperature-sensitive element are included in a circuit determining the difference between a specific property of the first and the second temperature-sensitive element, which property varies depending on the air flow velocity, a computing circuit which converts this difference into a pulse-width signal that depends on the magnitude of the difference, and a servomotor whose output shaft is coupled to the air valve and determines the position thereof, of which output shaft the position is determined by the width of the pulses fed at the input thereof.

The air valve can be of the pivoting type, of the rotating type or of the sliding type.

It will immediately be appreciated by anyone skilled in the art that there are various possibilities, all of which are known per se, of coupling the output shaft of the servomotor to a pivoting, rotating or sliding ventilating valve in such a manner that a variation in the position of the shaft of the servomotor effects a variation in the position of the air valve.

It is observed that sensors are available on the market capable of providing a signal that is a measure for the speed of an air flow. The price of one such sensor, however, is a multiple of the current price of a complete ventilating grate, so that these known sensors are not applicable for economical reasons.

It is also observed that US-A-3,757,808 discloses a system for controlling the position of an air valve comprising a sensor adapted to detect the velocity of an air flow along the air valve. The sensor comprises a circuit consisting of a first and a second temperature sensitive element, means being provided for heating said first element. The two elements are disposed in the air duct and are incorporated into a circuit determining the difference between a specific property (temperature) of said two elements which property varies depending on the magnitude of the air flow. A circuit is also provided to convert said difference into a signal that depends on the magnitude of the difference. An actuator is provided to receive said signal and comprises an output shaft coupled to the air valve and determining the position thereof, the position of said shaft being determined by the magnitude of the signal.

Hereinafter, the invention will be further explained on the basis of an exemplary embodiment with reference to the accompanying drawings, wherein:
Fig. 1 shows a block diagram of the system according to the invention;
Fig. 2a is a diagrammatic representation of the position of the temperature-sensitive elements of the sensor associated with the system according to the invention, in a measuring channel provided in a ventilating device; and
Fig. 2b shows a cross section taken on the line IIb-IIb in Fig. 2a.

The system according to the invention essentially consists of four parts: a bridge circuit 1, a comparator circuit 2, a microprocessor 3 and a servomotor 4, whose shaft is coupled to the air valve of a ventilating device to enable variation of the position of this valve. As is already mentioned hereinabove, such ventilating devices with controllable air valves are generally known and therefore, the ventilating device is not further shown in detail in the drawing.

The bridge circuit comprises two temperature-sensitive elements 11 and 12, according to the invention resistors having a positive temperature coefficient, while in the vicinity of resistor 11 a heating element, for instance a heating coil 15, is disposed with which the element 11 is heated to a temperature that is clearly above the ambient temperature. The element 12, that is like the element 11 disposed in the air flow but not artificially heated, is of the same type as the element 11 and serves to compensate for environmental influences, such as the ambient temperature, and for ageing phenomena that might affect the measurement. The bridge circuit further comprises a resistor 13 and a settable resistor 14. The resistors 13 and 11 are interconnected in series between a positive and a negative supply voltage line, 5 and 6 respectively, and the resistors 14 and 12 are likewise interconnected in series between the same supply voltage lines. The output signal of the bridge circuit is present between on the one hand the nodal point of the resistors 13 and 11 and on the other hand the nodal point of the resistors 12 and 14. By means of the resistor 14, the bridge balance can be set.

Via resistors 21 and 22 respectively, the output signal of the bridge circuit 1 is fed to the inverting and the non-inverting input of an operational amplifier 20, which forms the main component of the comparator 2 and whose output is fed back via a resistor 23 to the inverting input of the operational amplifier.

At the output of the operational amplifier 20, the comparator provides a signal proportional to the difference between the resistor value of the PTC resistor 11 and that of the PTC resistor 12. This signal is proportional to the air velocity through the ventilation outflow openings of the grate and is fed to the input 31 of a microprocessor 30. This microprocessor is programmed to provide, at the output 32 thereof, a pulse-shaped signal whose pulse width depends on the magnitude of the signal at the input 31.

Another possibility is to use, instead of temperature-sensitive elements, pressure-sensitive elements, for instance a differential pressure detector consisting of for instance two pressure sensors provided on both sides of an orifice meter, of which pressure sensors the output signal can be connected to the bridge circuit instead of the resistors 11 and 12. Such pressure sensors can be used both in a fixed opening in the ventilating device and in an opening varied in size by the ventilating valve.

The output signal at the output 32 can be a continuous flow of pulse-shaped signals, but it is also possible to provide a brief series of pulses only upon variation of the signal at the input 31. The microprocessor further has a clock input 33 to which a clock signal is fed from a clock signal generator 34 known per se. The output signal of the output 32 of the microprocessor is coupled to the control input 41 of the servomotor. Finally, the microprocessor comprises two further inputs 35 and 37. When, by the closing of a switch 36, input 35 is connected to the negative supply voltage line 6, the microprocessor provides at the output a pulse signal having a first predetermined pulse width such that the servomotor 40 opens the ventilating valve completely. When, by the closing of a switch 38, the input 37 is connected to the zero-volt supply voltage line 6, the microprocess provides at the output 32 thereof a signal having a second predetermined pulse width such that the servomotor 40 closes the ventilating valve completely. Servomotors that are suitable for use with the system according to the invention are generally available, suitable types are for instance the types C507-C509 of the brand Graupner or the type HS 300 of the type Hitec. In this manner, the occupant of the building wherein the ventilating device is located can, if so desired, open or close the air valve completely, independently of the actual air flow through the ventilating grate. It is also possible to combine the switches 36 and 38 of a number of ventilating devices in a single central control panel, so that, by means of a single switch 36 or 38, the ventilating valves of a number of ventilating devices, which may or may not be present in different spaces, may respectively be simultaneously opened or closed completely. Also, a temperature detector may be provided which is active for one or more ventilating devices and which, when the temperature inside or outside the building wherein the ventilating device(s) is (are) located rises above a specific value, operates the switch 36 to open the air valve completely, and which, when the temperature drops below a specific value, operates the switch 38 to close the valve completely. When the two switches 36 and 38 are opened, the system automatically controls the position of the air valve by means of the servomotor 40. To prevent inaccuracies caused by play in the mechanism for displacing the air valve, the air valve is always diplaced in one direction toward its position to be assumed. This means, that when the air valve is further opened, the end position is reached by first opening the air valve further than desired, and then bringing it to the calculated end position. Closing of the air valve is then effected by bringing the air valve directly to the calculated end position. Of course, a control in opposite direction is also possible.

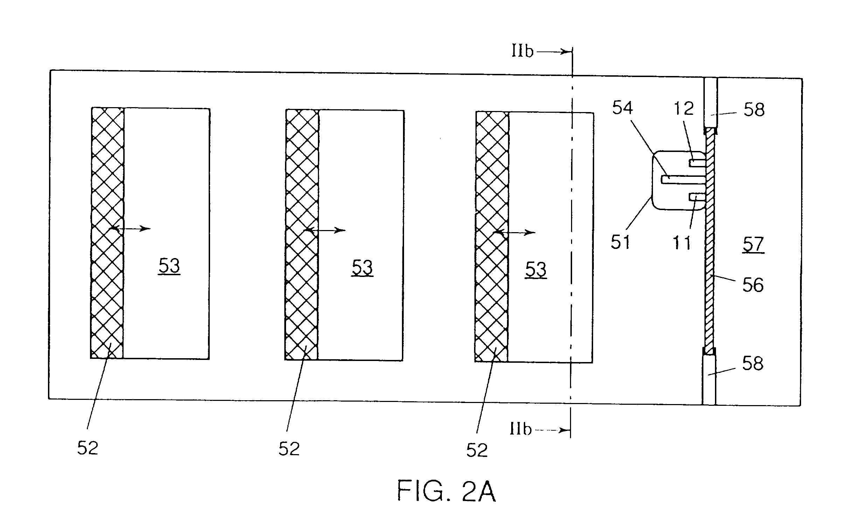

Fig. 2a shows very diagrammatically how the PCT resistors 11 and 12 are disposed in a rectangular measuring channel 51 provided in a ventilating device. By way of illustration, a portion of a ventilating device 50 of the sliding type with air outlet openings 52 and a slidable air valve 53 is shown. The ventilating device shown is a so-called silencer wherein provisions are made for minimizing the transmission of noise from the inlet opening 55 to the outlet opening 52. However, the invention can also be applied in conventional ventilating grates.

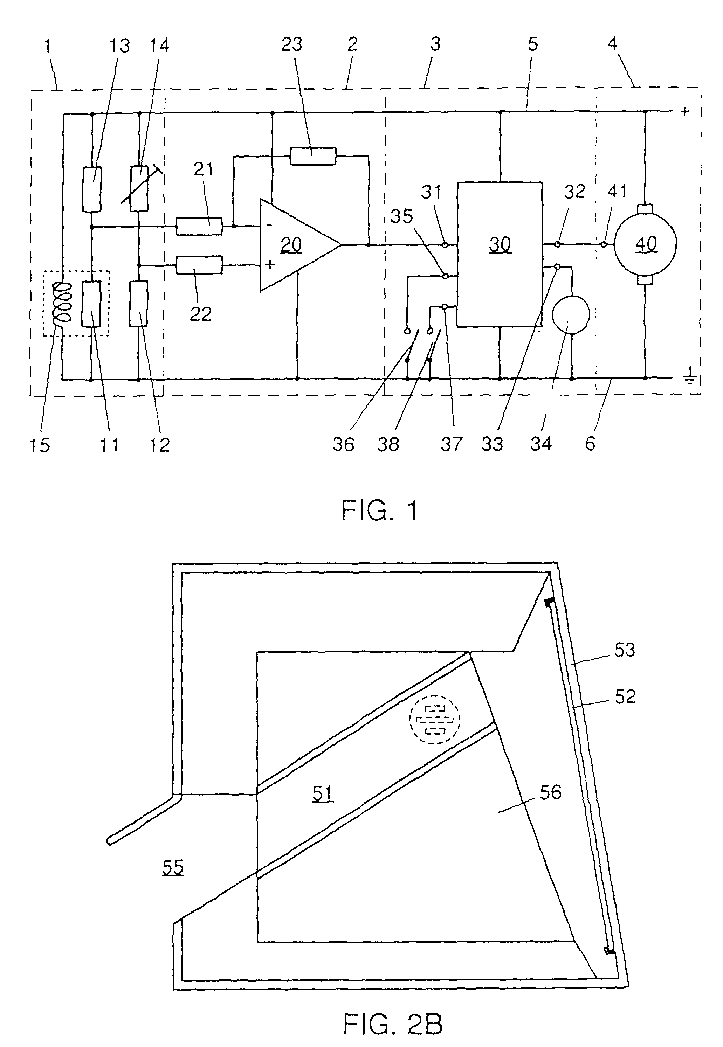

As Fig. 2b demonstrates, the measuring channel 51 containing the sensor 11, 12 is provided in the ventilating device so that it extends from the inlet opening 54 to the space behind the air valve or slide. In this manner, all air passing the measuring channel must also pass this valve or slide, because the space wherein the measuring channel terminates is in open communication with the space behind the valve or slide. In this manner, turbulence around the sensor, which may cause measuring errors, is avoided and the signal provided by the sensor is a direct or indirect measure for the air velocity through the grate and independent of the dimensions of the grate and of the size of the inlet openings thereof.

The actual construction and operation of the ventilating device 50 is further not important for a proper understanding of the invention and is otherwise well-known, so that it will not be further discussed.

In the above-described embodiments, the resistor 11 is heated and disposed so as to be located in the air flow which also passes through the ventilating device and the resistor 12 is likewise disposed in the air flow, but is thermally insulated from the resistor 11 by means of a heat-resistant partition 54, so that the heat thereof does not influence the resistance value of the resistor 12. The heating of the resistor 11 can for instance take place by providing it on a ceramic substrate and surrounding it with a strip of a relatively high resistance wherein, by means of a suitable current value, the desired heat is generated. The magnitude of the air flow along both the resistor 11 and the resistor 12 depends on the pressure difference over the ventilating device and provides the desired signal for controlling the servomotor, a greater air flow will provide that both the resistor 12 and the resistor 11 cool down, but as the resistor 11 is artificially maintained at a higher temperature than the ambient temperature, the cooling of this resistor is relatively greater than the cooling of the resistor 12. It has appeared that in this manner, over a large range of ambient temperatures, a signal is provided by the bridge circuit 1, which signal exclusively depends on the magnitude of the air flow through the opening 21 or through the opening 52.

The sensor 11, 12 is mounted on a printed circuit-board shown in Fig. 2a, slid into the ventilating device in rails 58 so that it can readily be removed for servicing. The other side of the pinted circuit-board mounts the other components diagrammatically shown in Fig. 1, with the exception of the servomotor 40, which is mounted on the slidable grate 52. These components are accommodated in a compartment 57 of the ventilating device so as to be shielded against external influences.

As a further variant of the invention, a differential pressure sensor, for instance consisting of two pressure sensors, each on one side of an orifice meter, can be disposed in the measuring channel 51.

## Claims

1. A ventilating device comprising an inlet opening (55) for air, an interior, an outflow opening (53) and an air valve (52), the size of the outflow opening being controlled by means of the air valve, a system being provided for controlling the position of the air valve, characterized in that the system comprises a sensor (1), which is arranged in a measuring channel (51) communicating on the one hand with the air inlet opening and on the other hand with a space in the interior of the ventilating device upstream of the outflow opening of the ventilating device, and which is adapted to detect the velocity of the air flow along the sensor and to provide a signal whose magnitude is representative of the flow rate of the air flow, said signal being fed to an operating element (40) for the position of the air valve.

2. A ventilating device according to claim 1, characterized in that the sensor comprises a circuit consisting of a first temperature-sensitive element (11) and a second temperature-sensititive element (12), which are disposed in the measuring channel (51), means (15) being provided for heating the first temperature-sensitive element; that the first and the second temperature-sensitive element are incorporated into a circuit (13 .... 23) determining the difference between a specific property of the first and the second temperature-sensitive element, which property varies depending on the magnitude of the air flow; that there is provided a circuit (30) which converts said difference into a signal that depends on the magnitude of the difference, and a servomotor (40) which receives said signal and comprises an output shaft coupled to the air valve (52) and determining the position thereof, the position of said output shaft being determined by the magnitude of the signal fed at the input thereof.

3. A ventilating device according to claim 1 or 2, characterized in that each of the temperature-sensitive elements (11, 12) is a temperature-sensitive resistor with a temperature coefficient, each being incorporated into one branch of a bridge circuit (11 ... 14), the output of the bridge circuit being coupled to a comparator (20) whose output signal is fed to a microprocessor (30) which at the output provides a signal having a pulse width that depends on the magnitude of the output signal of the comparator.

4. A ventilating device according to claim 1, characterized in that the sensor (1) is a differential pressure detector providing a signal whose magnitude depends on the pressure difference, and that a servomotor is provided which receives said signal and which comprises an output shaft coupled to the air valve and determining the position thereof, the position of said output shaft being determined by the magnitude of the signal fed at the input thereof.

5. A ventilating device according to claim 4, characterized in that the differential pressure detector consists of two pressure sensors disposed on both sides of an orifice, and that the two pressure sensors are incorporated into a bridge circuit whose outputs are connected to the inputs of a comparator whose output signal is fed to a microprocessor which at the output provides a signal having a pulse width that depends on the magnitude of the output signal of the comparator.

## Patentansprüche

1. Ventilationsvorrichtung mit einer Lufteinlaßöffnung (55), einem Inneren, einer Austrittsöffnung (53) und einem Luftventil (52), wobei die Größe der Austrittsöffnung durch das Luftventil geregelt ist, und wobei ein System zum Regeln der Position des Luftventils vorgesehen ist, dadurch gekennzeichnet, daß das System einen Sensor (1) aufweist, der in einem Meßkanal (51) angeordnet ist, welcher einerseits mit der Lufteinlaßöffnung und andererseits mit einem Raum Im Inneren der Ventilationsvorrichtung in Verbindung steht, der stromaufwärts der Austrittsöffnung der Ventilationsöffnung liegt, und (wobei der Sensor) der in der Lage ist, die Geschwindigkeit der am Sensor entlang strömenden Luftströmung zu erkennen und ein Signal zu liefern, dessen Stärke die Strömungsrate der Luftströmung angibt, wobei das Signal einem Stellelement (40) für die Position des Luftventils zugeführt wird.

2. Ventilationsvorrichtung nach Anspruch 1, dadurch gekennzeichnet, daß der Sensor eine Schaltung aufweist, die aus einem ersten temperaturempfindlichen Element (11) und einem zweiten temperaturempfindlichen Element (12) besteht, welche im Meßkanal (51) angeordnet sind, wobei eine Einrichtung (15) zum Erwärmen des ersten temperaturempfindlichen Elements vorgesehen sind; daß das erste und das zweite temperaturempfindliche Element in eine Schaltung (13.....23) eingefügt sind, welche die Differenz zwischen einer spezifischen Eigenschaft des ersten und des zweiten temperaturempfindlichen Elements bestimmt, wobei die Eigenschaft je nach der Stärke der Luftströmung variiert; daß eine Schaltung (30) vorgesehen ist, die diese Differenz in ein Signal umwandelt, das von der Größe der Differenz abhängt, und ein Servomotor (40) vorgesehen ist, der das Signal empfängt und eine Abtriebswelle aufweist, die mit dem Luftventil (52) verbunden ist und dessen Position bestimmt, wobei die Position der Abtriebswelle durch die Stärke des am Eingang desselben eingegebenen Signals bestimmt ist.

3. Ventilationsvorrichtung nach Anspruch 1 oder 2, dadurch gekennzeichnet, daß jedes der temperaturempfindlichen Elemente (11, 12) ein temperaturempfindlicher Widerstand mit einem Temperaturkoeffizienten ist, der jeweils in einen Zweig einer Brückenschaltung (11....14) eingebaut ist, wobei der Ausgang der Brückenschaltung mit einem Komparator (20) verbunden ist, dessen Ausgangssignal einem Mikroprozessor (30) zugeführt wird, der am Ausgang ein Signal mit einer Impulsweite liefert, die von der Stärke des Ausgangssignals des Komparators abhängt.

4. Ventilationsvorrichtung nach Anspruch 1, dadurch gekennzeichnet, daß der Sensor (1) ein Druckdifferenzdetektor ist, der ein Signal liefert, dessen Stärke von der Druckdifferenz abhängt, und daß ein Servomotor vorgesehen ist, der das Signal empfängt und eine mit dem Luftventil verbundene Abtriebswelle aufweist, welche dessen Position bestimmt, wobei die Position der Abtriebswelle durch die Stärke des am Eingang desselben eingegebenen Signals bestimmt ist.

5. Ventilatlonsvorrichtung nach Anspruch 4, dadurch gekennzeichnet, daß der Druckdifferenzdetektor aus zwei zu beiden Seiten einer Öffnung angeordneten Drucksensoren besteht, und daß die beiden Drucksensoren in einer Brückenschaltung eingebaut sind, deren Ausgänge mit dem Eingang eines Komparators verbunden sind, dessen Ausgangssignal einem Mikroprozessor zugeführt wird, der am Ausgang ein Signal mit einer Impulsweite liefert, die von der Stärke des Ausgangssignals des Komparators abhängt.

## Revendications

1. Dispositif de ventilation comportant une ouverture d'entrée (55) pour de l'air, un intérieur, une ouverture d'écoulement de sortie (53) et une soupape d'air (52), la taille de l'ouverture d'écoulement de sortie étant commandée au moyen de la soupape d'air, un système étant prévu pour commander la position de la soupape d'air, caractérisé en ce que le système comporte un capteur (1), qui est disposé dans un canal de mesure (51) qui communique d'une part avec l'ouverture d'entrée d'air et d'autre part avec un espace à l'intérieur du dispositif de ventilation en amont de l'ouverture d'écoulement de sortie du dispositif de ventilation, et qui est prévu pour détecter la vitesse de l'écoulement d'air le long du capteur et pour délivrer un signal dont l'amplitude est représentative du débit de l'écoulement d'air, ledit signal étant délivré à un élément d'actionnement (40) pour la position de la soupape d'air.

2. Dispositif de ventilation selon la revendication 1, caractérisé en ce que le capteur comporte un circuit se composant d'un premier élément sensible à la température (11) et d'un deuxième élément sensible à la température (12), qui sont disposés dans le canal de mesure (51), des moyens (15) étant prévus pour chauffer le premier élément sensible à la température, en ce que le premier et le deuxième élément sensible à la température sont incorporés dans un circuit (13 ... 23) qui détermine la différence entre une propriété spécifique du premier et du deuxième élément sensible à la température, laquelle propriété varie en fonction de l'amplitude de l'écoulement d'air; en ce qu'est prévu un circuit (30) qui convertit ladite différence en un signal qui dépend de l'amplitude de la différence, et un servomoteur (40) qui reçoit ledit signal et comporte un arbre de sortie relié à la soupape d'air (52) et déterminant la position de celle-ci, la position dudit arbre de sortie étant déterminée par l'amplitude du signal délivré à l'entrée de celui-ci.

3. Dispositif de ventilation selon la revendication 1 ou 2, caractérisé en ce que chacun des éléments sensibles à la température (1, 12) est une résistance sensible à la température avec un coefficient de température, chacune étant incorporée dans une branche d'un circuit en pont (11 ... 14), la sortie du circuit en pont étant reliée à un comparateur (20) dont le signal de sortie est délivré à un microprocesseur (30) qui, au niveau de la sortie, délivre un signal ayant une largeur d'impulsion qui dépend de l'amplitude du signal de sortie du comparateur.

4. Dispositif de ventilation selon la revendication 1, caractérisé en ce que le capteur (1) est un détecteur de pression différentielle délivrant un signal dont l'amplitude dépend de la différence de pression, et en ce qu'est prévu un servomoteur qui reçoit ledit signal qui comporte un arbre de sortie relié à la soupape d'air et déterminant la position de celle-ci, la position dudit arbre de sortie étant déterminée par l'amplitude du signal délivré à l'entrée de celui-ci.

5. Dispositif de ventilation selon la revendication 4, caractérisé en ce que le détecteur de pression différentielle se compose de deux capteurs de pression disposés des deux côtés d'un orifice, et en ce que les deux capteurs de pression sont incorporés dans un circuit en pont dont les sorties sont reliées aux entrées d'un comparateur dont le signal de sortie est délivré à un microprocesseur qui délivre en sortie un signal ayant une largeur d'impulsion qui dépend de l'amplitude du signal de sortie du comparateur.
